# EUROPÄISCHE PATENTSCHRIFT

(11) **EP 0 519 106 B1**
(45) Veröffentlichungstag und Bekanntmachung des Hinweises auf die Patenterteilung: **05.06.1996**
(21) Anmeldenummer: 91110182.2
(22) Anmeldetag: 20.06.1991
(51) Int. Cl.: H04Q 11/04, H04Q 3/545

(54) **Steuerung einer Busverbindung**
Bus link control
Commande de liaison de type bus

(43) Veröffentlichungstag der Anmeldung: 23.12.1992
(73) Patentinhaber: SIEMENS AKTIENGESELLSCHAFT, D-80333 München (DE)
(72) Erfinder: Leimkötter, Ulrich, Dipl.-Ing., W-4650 Gelsenkirchen (DE)

(56) Entgegenhaltungen:
- DE-A- 3 941 349
- ELEKTROTECHNIK UND INFORMATIONSTECHNIK, Bd. 106, Nr. 11, 1989, WIEN AT Seiten 501 - 503; G.GODEL: 'Die Software in digitalen Vermittlungssystemen - System-Variante OES-E'
- NACHRICHTEN TECHNIK ELEKTRONIK, Bd. 35, Nr. 2, 1985, BERLIN DD Seiten 45 - 47; H.KIESER: 'Software für eine digitale Vermittlungsanlage mit modularem Aufbau'
- IEEE GLOBAL TELECOMMUNICATIONS CONFERENCE & EXHIBITION, SESSION 42, PAPER 4 Bd. 3, 28. November 1988, HOLLYWOOD US Seiten 1 - 6; OZEKI ET AL.: 'Implementation of real-time operating system for integrated switching system'

## Beschreibung

Die Erfindung betrifft eine Steuerung einer Busverbindung, insbesondere eines High Level Data Link Control (HDLC) Übertragungsverfahrens, auf einem Datenbus zwischen einem Zentralprozessor einer programmgesteuerten Kommunikationsanlage bzw. Vermittlungseinrichtung und Anschaltebaugruppen der Kommunikationsanlage, z.B. eine anaolge/digitale Anschaltebaugruppe und/oder eine Anschaltebaugruppe für Amtsleitungen, wobei die an einen gemeinsamen Datenbus angeschlossenen Anschaltebaugruppen über eine Baugruppensteuerung mit einer Busstruktur eines zur Steuerung der Kommunikationsanlage dienenden Zentralprozessors verbunden sind.

Programmgesteuerte Kommunikationsanlagen dienen in Kommunikationssytemen zur Verbindung von Kommunikationsendgeräten untereinander und zur Verbindung dieser Kommunikationsendgeräte mit Kommunikationsnetzen, insbesondere öffentlichen Netzen.

Unabhängig vom Komplexitätsgrad des zugrundeliegenden Kommunikationssystems besteht eine Kommunikationsanlage im Prinzip aus einer Vielzahl von vermittlungstechnischen Funktionseinheiten und einem programmierbaren digitalen Rechensystem, das diese Funktionseinheiten mit einem Multitasking-Betriebssystem überwacht und alle vermittlungstechnischen Abläufe einleitet und steuert.

In DE-A-39 41 349 ist eine Steuerung gemäß dem Uberbegriff des Anspruchs 1 beschrieben.

Zur Überwachung und Steuerung von Funktionseinheiten, insbesondere von Anschaltebaugruppen wie z.B. analoge Teilnehmeranschaltebaugruppen (SLMA), Konferenzschaltungsbaugruppen (CONF) oder eine Anschaltebaugruppe für Amtsleitungen (TML), in einer Kommunikationsanlage ist es unumgänglich, daß der Zentralprozessor ständig z.B. den Betriebszustand der Anschaltebaugruppen überwacht oder anliegende Signalisierungsinformationen erkennt, um dann sofort entsprechende Steuerinformationen an die entsprechend adressierten Anschaltebaugruppen weiterzuleiten.

Bisher ist es üblich, daß Signalisierungsinformationen der über einen Datenbus angeschlossenen Anschaltebaugruppen durch einen Zentralprozessor des Rechensystems nach einem Master/Slave Verfahren abgearbeitet werden. Der Zentralprozessor übernimmt dabei die Rolle des Masters, die Anschaltebaugruppe die des Slaves. Die Abfrage und Bearbeitung der Anschaltebaugruppen wird dabei durch Abfrageprozeduren durch den Zentralprozessor der Kommunikationsanlage angestoßen und gesteuert. Die an den Anschaltebaugruppen anliegenden Signalisierungsänderungen werden dabei durch den Zentralprozessor erkannt, abgefragt und ausgewertet.
Das Verfahren zur Signalisierungsabfrage und Steuerdatenzuweisung zu den über den Datenbus angeschlossenen Anschaltebaugruppen ist durch ein Protokoll für den entstehenden Meldungsverkehr vorgegeben:
a) Abfragen nach Signalisierungsinformation:
   -- Pollabfrage durch den Zentralprozessor
   -- Informationsstring von der Anschaltebaugruppe
   -- Quittung durch den Zentralprozessor
b) Übertragung von Steuerdaten:
   -- Steuerung durch Zentralrechner senden
   -- Quittung von der Anschaltebaugruppe

Das Protokoll für den Meldungsverkehr ist dabei so ausgelegt, daß eine Aktion (Signalisierungsabfrage/Steuerdatenzuweisung), die durch eine Pollabfrage des Zentralprozessors eingeleitet wurde, erst vollständig abgeschlossen sein muß, bevor eine Signalisierungsinformation einer weiteren Anschaltebaugruppe oder eines höherprioren Prozesses abgearbeitet werden kann. Dies führt gerade in Kommunikationsanlagen, insbesondere in Keytelefonanlagen, zu erheblichen zeitkritischen Problemen, da einerseits der Zentralprozessor ständig abzuarbeitende Systemaufgaben des im Multitasking-Betriebssystem betriebenen Kommunikationssystems der Kommunikationsanlage durchführt und andererseits die Signalisierungsinformationen der Anschaltebaugruppen innerhalb eines bestimmter, Zeitraumes erkennt und abarbeitet. Bei auftretenden hohen "Lasten", z.B. maximale Vermittlungskapazität, führt dies zu erheblichen Einschränkungen von Leistungsmerkmalen der Kommunikationsanlage, z.B. hohe Wartezeiten des Fernsprechteilnehmers.
Darüber hinaus darf bei einem Mulitasking-Betriebssystem ein Prozeß des Abfragens der Anschaltebaugruppe oder der Übertragung zu der Anschaltebaugruppe nicht durch einen höherprioren Prozess gestört werden, da sonst Daten vom Zentralprozessor zu Funktionseinheiten geleitet werden, für die sie nicht bestimmt sind.
Ein Ausfall von Leistungsmerkmalen wäre die Folge von falsch oder unvollständig weitergeleiteten Daten. Eine ausschließliche Zuweisung des Zentralprozessors zur Bearbeitung von Anschaltebaugruppen führt zudem zu unzumutbaren hohen Wartezeiten für den Fernsprechteilnehmer oder zu Blockierungen für andere in der Kommunikationsanlage durchzuführende Systemaufgaben.
Um die aufgeführten Einschränkungen von Leistungsmerkmalen der Kommunikationsanlage zu beheben, ist es bekannt (EP 0 347 644 A1) die an ein Bussystem angeschlossenen Anschaltebaugruppen über Vorprozessoren zusammenzufassen. Das gesamte Protokoll des entstehenden Meldungsverkehrs von und zu den Anschaltebaugruppen der Kommunikationsanlage wird von den Vorprozessoren übernommen. Die Vorprozessoren setzen dabei die Signalisierunginformation der Anschaltebaugruppen in vermittlungstechnische Anreize um.

Die der Erfindung zugrundeliegende Aufgabe besteht darin, ein weiteres bitorientiertes Übertragungssteuerungsverfahren unter den Anforderungen eines mit nur einem Prozessor ausgestatteten Systems, insbesondere einer programmgesteuerten Kommunikationsanlage, anzugegeben, welches eine Bearbeitung eines Bussystems ermöglicht.

Die Lösung dieser Aufgabe ergibt sich aus Patentanspruch 1.

Die Erfindung weist neben dem wirtschaftlichen Vorteil einer Einsparung eines oder mehrerer Vorprozessoren noch den weiteren Vorteil auf, daß trotz höchster Auslastung der vermittlungstechnischen Funktionseinheiten der Kommunikationsanlage, wie z. B. bei maximal möglichem Vermittlungsaufkommen und gleichzeitigem Anliegen von Signalisierungsinformationen an allen Anschaltebaugruppen, sämtliche Leistungsmerkmale der Kommunikationsanlage verfügbar bleiben.

Die Erfindung bringt durch Abruf eines Speicherabarbeitungsprogrammoduls, das die im Systemspeicher zwischengespeicherte anschaltebaugruppenspezifische Signalisierungsinformation in zeitkritische Systemanreize und zeitverteilte Systemanreize umsetzt, wobei es den Systemanreizen innerhalb des Betriebssystemes eine niedere oder höhere Priorität zuweist, und diese abarbeitet, wobei die zeitverteilten Systemanreize in einen Speicherbereich eines Zeitmanagesmentsystems eingereit werden, den Vorteil mit, daß die Bearbeitung der im Systemspeicher gesicherten anschaltebaugruppennspezifischen Signalisierungsinformationen in einem je nach Art der Anschaltebaugruppe abhängigen Zeitraster durchgeführt wird. Die zeitkritischen und die zeitverteilten Systemanreize werden jeweils zeitoptimal zwischen den in den vom Betriebssystem der Kommunikationsanlage abzuarbeitenden Prozeduren eingebracht.

Eine weitere Ausgestaltung der Erfindung ist, daß das Zählraster des im Hintergrund geführten Taktzählers klein ist gegenüber einem Bearbeitungszyklus. Das Zählraster ist dabei vorzugsweise ≤ 1/4 der Zeitdauer des Bearbeitungszyklus. Dies bringt den Vorteil mit, daß aufgrund des Standes des Taktzählers eine qualifizierte Aussage getroffen werden kann, ob und welche zeitunkritische/n Systemaufgabe/n noch abgearbeitet werden kann/können.

Eine weitere vorteilhafte Ausgestaltung der Erfindung ist, daß ein erstes Ausgabeprogrammodul Steuerinformationen an die Anschaltebaugruppen in ein anschaltebaugruppenspezifisches Format umsetzt und dieses in einen ersten Ausgabespeicher einträgt. Dies bringt neben dem Vorteil einer besseren Auslastung des Zentralprozessors den Vorteil mit, daß nicht auf jeder Anschaltebaugruppe eigene anschaltebaugruppenspezifische Umsetzer angeordnet werden müssen.
Eine weitere Ausgestaltung der Erfindung ist, daß die Speicherabarbeitung nach dem FIFO-Modus (First In,First Out) durchgeführt wird. Dies bringt den Vorteil mit, daß die anschaltebaugruppenspezifischen Steuerdaten entsprechend der zeitlichen Abfolge des Einlesens in den ersten Ausgabespeicher wieder aus dem Speicher ausgelesen werden und dabei entsprechend dem Betriebssystem der Kommunikationsanlage die logische Abfolge eines Verbindungsaufbaus oder Verbindungsabbaus, z.B. einer Gesprächsverbindung oder einer Konferenzschaltung, beibehalten wird.
Entsprechend der logischen Abfolge eines Verbindungsaufbaus/abbaus ist die zeitliche Abfolge der Anforderungen der betreffenden Anschaltebaugruppen unter dem Aspekt von zeitverteilten oder zeitkritischen Systemaufgaben gesichert.

Eine weitere Ausgestaltung der Erfindung ist, daß ein zweites Ausgabeprogrammodul zeitunkritische anschaltebaugruppenspezifische Steuerinformation, insbesondere Wartungsinformation, Betriebssoftware für Anschaltebaugruppen oder Satzdaten für die Betriebsscftware, in einen zweiten Ausgabespeicher einträgt und entsprechend dem Zeitraster in einer zweiten Zeitscheibe des Betriebssystems zu den Anschaltebaugruppen überträgt. Dies bringt neben dem Vorteil einer optimalen zeitlichen Ausnutzung des Bearbeitungszyklus mit auszuführenden Systemaufgaben den weiteren Vorteil mit, daß das Kommunikationssystem jederzeit die Übertragung der zeitunkritischen Steuerinformationen unterbrechen kann, um z.B. höher priorisierte Systemprozesse wie vermittlungstechnische Funktionen wahrzunehmen.

Weitere Besonderheiten der Erfindung werden nun aus den nachfolgenden näheren Erläuterungen eines bitorientierten Übertragungsverfahrens, beispieisweise einer High Level Data Link Control -HDLC- Steuerstruktur auf einem HDLC-Bus, gemäß der Erfindung anhand der Zeichnungen ersichtlich.

Es zeigen:
- Figur 1: ein Blockschaltbild eines in einer Kommunikationsanlage integrierten HDLC-Bus,
- Figur 2: eine schematische Darstellung zur Veranschaulichung der Zuweisung von Programmodulen über eine Prozeßliste,
- Figur 3: eine Einordnung einer HDLC-Steuerstruktur in ein Betriebssystem,
- Figur 4: ein Zusammenwirken von Programmodulen,
- Figur 5: ein Ablaufdiagramm eines Streckenbearbeitungsprogrammoduls.

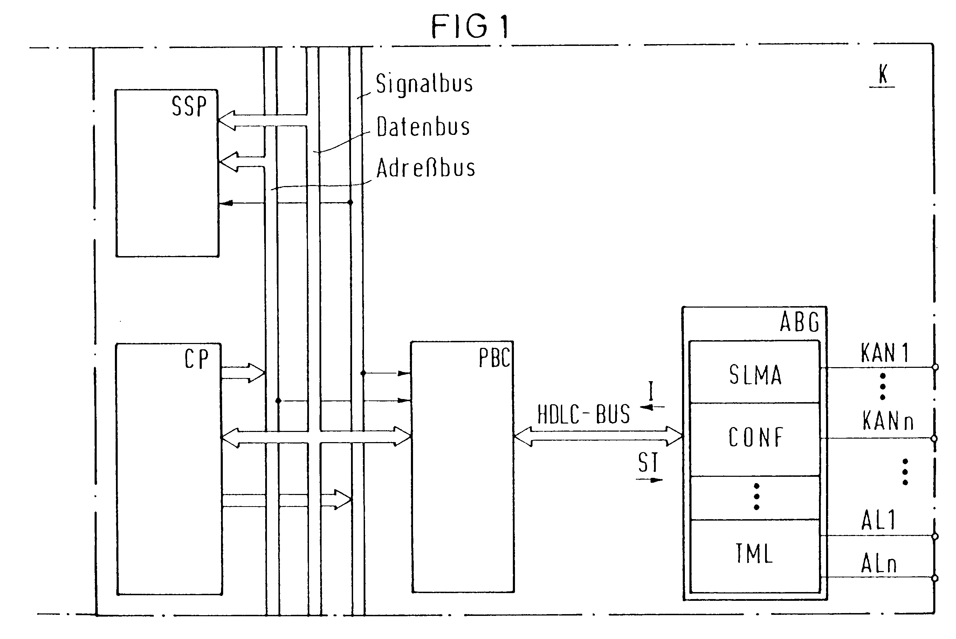

Figur 1 zeigt schematisch einen in einem zum Verständnis der Erfindung erforderlichem Umfang einen in einer Kommunikationsanlage K integrierten HDLC-Bus.
Über die Anschaltebaugruppen ABG, wie z.B. analoge Teilnehmeranschaltebaugruppen (SLMA), Konferenzschaltungsbaugruppen (CONF) oder Anschaltebaugruppen für Amtsleitungen (TML), ist eine Vielzahl von Anschlüssen KANl,..., KANn oder Amtsleitungen ALl,..., ALn anschließbar.
An den Anschaltebaugruppen ABG (SLMA, CONF, TML) der Kommunikationsanlage K kann an einzelnen oder an allen Anschaltebaugruppen ABG eine Signalisierungsinformation I anliegen. Ein HDLC-Bus verbindet die Anschaltebaugruppen ABG mit einer Baugruppensteuerung PBC. Die Baugruppensteuerung PBC ist mit dem Bussystem (Adreßbus, Datenbus, Signalbus) des Zentralprozessors CP verbunden. Die vom Zentralprozessor CP gesteuerte Übertragung von Daten auf dem HDLC-Bus kann beispielsweise im Halbduplexbetrieb durchgeführt werden, das heißt, daß der HDLC-Bus pro Datenübertragung immer nur in einer Übertragungsrichtung freigegeben wird. Die von der Anschaltebaugruppe ABG zur Baugruppensteuerung PBC zu übertragende Signalisierungsinformation I oder die von der Baugruppensteuerung PBC zu den Anschaltebaugruppen ABG zu übertragende Steuerinformation ST wird dabei mit einer HDLC-Übertragungsprozedur übertragen.
Die HDLC-Übertragungsprozedur entspricht den Prozeduren einer ersten und zweiten Schicht (Bitübertragungsschicht, Sicherungsschicht) des Open System Interconnection (OSI)-Modells. Dieses OSI Referenzmodell wurde von der Internaltionalen Organisation für Standardisierung (ISO) in Zusammenarbeit mit CCITT genormt.
Der zur Übertragungsprozedur nötige Übertragungsrahmen, im wesentlichen bestehend aus einer Bitfolge zur Rahmenbegrenzung, Adreßfeld, Steuerfeld für Befehle oder Meldungen, Feld für die zu übertragenden Daten sowie einer Rahmenprüffolge, dient während einer HDLC-Übertragungsprozedur zur Datenübertragung und zur Datensicherung. Die Baugruppensteuerung PBC hat dabei zum einen die Aufgabe, die übertragenen Daten (Signalisierungsinformation I) aus dem Übertragungsrahmen zu nehmen und eine Serien-Parallel-Umsetzung der von den Anschaltebaugruppen ABG übertragenen Signalisierungsinformation I vorzunehmen, und zum anderen eine Parallel-Seriell-Umsetzung der zu übertragenden Steuerinformationen ST durchzuführen. Zusätzlich wird die seriell übertragene Signaliserungsinformation I von den Anschaltebaugruppen ABG auf Übertragungsfehler hin überprüft und berichtigt.
An den Adreß-, Signal- und Datenbus des Bussystemes des Zentralprozessors CP ist, wie in Fig.1 dargestellt eine weitere Baugruppe, ein Systemspeicher SSP, angeschlossen.
Der Systemspeicher SSP besteht aus Halbleiterspeicherbausteinen unterschiedlichen Speichertyps; einem EPROM-Speicher, in dem das gesamte Systemprogramm unabänderbar hinterlegt ist; einem RAM-Speicher, der als Schreib-Lese-Arbeitsspeicher dient; einem EEPROM-Speicher, in dem Bedienerdaten, z.B. Kurzrufnummern, hinterlegt sind. Da die Daten des RAM-Speichers bei Spannungsausfall verlorengehen, sorgt eine netzunabhänige Spannungsquelle, z.B. Batterie, für den Erhalt der abgespeicherten Daten.
Über den Datenbus sind der Systemspeicher SSP und die Baugruppensteuerung PBC mit dem Zentralprozessor CP verbunden.

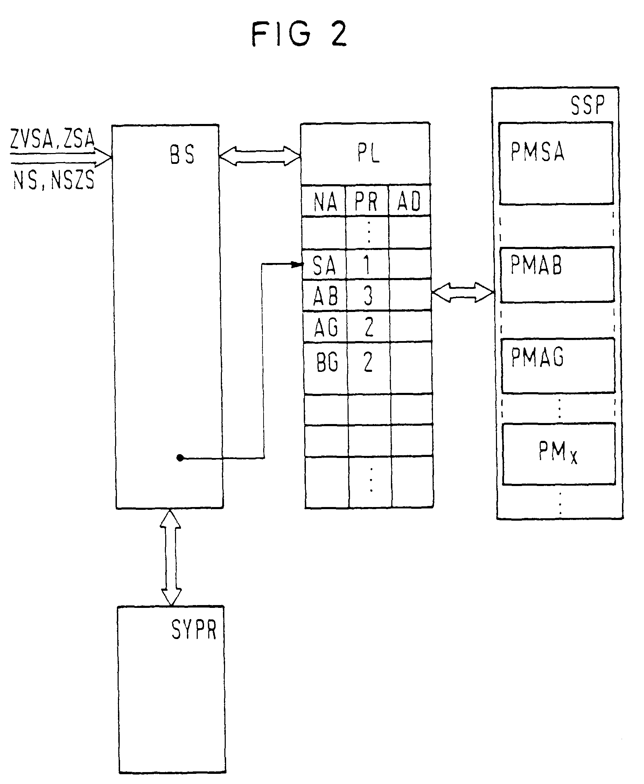

Die Figur 2 zeigt anhand schematisch dargestellter Funktionsblöcke das Zusammenwirken von einem in einem Zentralprozessor CP angeordneten Systemprozessor SYPR mit einem Betriebsystem BS, einer Prozeßliste PL und abgespeicherten Programmodulen PMx.

Vom Prinzip her dient der Systemprozessor SYPR ausschließlich zur Bearbeitung des als Betriebssystem BS bezeichneten Programmes. Dieses Betriebssystemprogramm ist so ausgelegt, daß es in Abhängigkeit von eintreffenden Systemaufgaben, wie z.B. notwendigen Systemaufgaben NS, NSZS, zeitunkritischen Systemaufgaben ZUS oder eintreffenden Systemanreizen, wie z.B. zeitverteilten Systemanreizen ZVSA, zeitkritischen Systemanreizen ZSA, nacheinander jeweils ein der ihm zur Verfügung stehendes Programmodul PMx, wie z.B. ein Streckenbearbeitungsprogrammodul PMSA, ein Speicherabarbeitungsprogrammodul PMAB oder ein Ausgabemodul PMAG, auswählt und für eine gewisse Zeitdauer dem Systemprozessor SYPR zur Ausführung zuteilt. Jedes Progammodul PMx ist als Programmcodesequenz im Systemspeicher SSP hinterlegt und hat einen Namen NA, z.B. eine Buchstabenkombination SA, AB, AG sowie einen Prioritätswert PR.
Dem Betriebssytem BS, insbesondere dem Multitasking-Betriebssystem BS, steht die Prozeßliste PL zur Verfügung, in der es die ablaufbereiten Progammodule PMx durch Eintragung des Namens NA, des Prioritätwertes PR und der Adresse AD des Programmodules PMx im Systemspeicher SSP vermerkt, und aus der es dann das jeweils höchstpriorisierte Programmodul PMx für eine Zuweisung an den Systemprozessor SYPR ermittelt.
Wird einem Programmodul PMx der Systemprozessor SYPR zugeteilt, kann das betreffende Programmodul PMx den Systemprozessor SYPR solange behalten, bis sich entweder ein höherpriorisiertes Programmodul um Zuteilung des Systemprozessors SYPR bewirbt oder bis es von sich aus den Systemprozessor SYPR abgibt. Letzteres trifft vor allem auch dann zu, wenn ein Programmodul PMx zur Bearbeitung seiner Systemaufgaben/Systemanreize gewisse von anderen Programmodulen zu erbringende Informationen benötigt und auf das Eintreffen dieser Information warten muß.

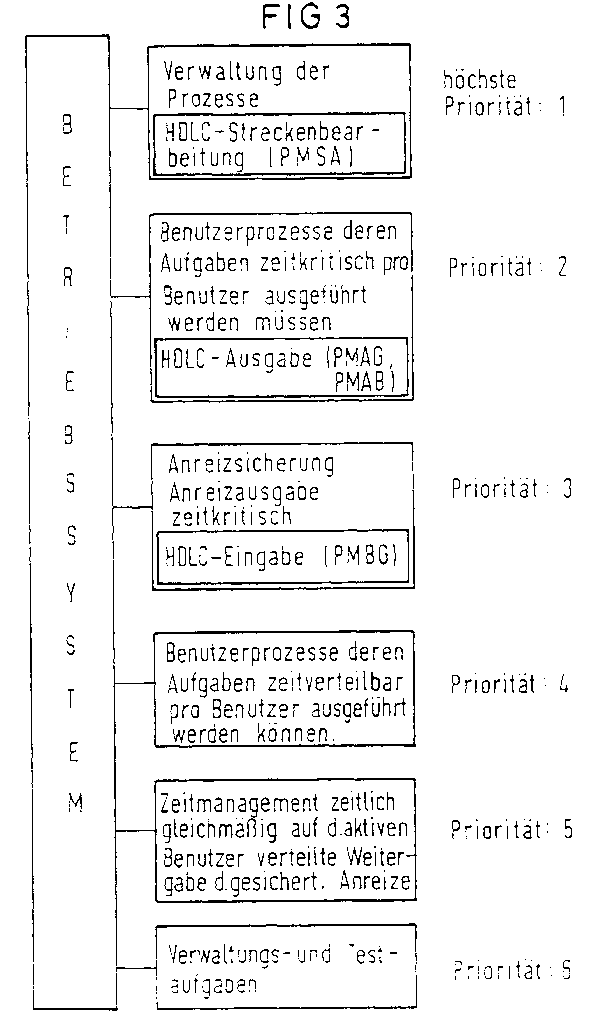

In Figur 3 sind die durch das Betriebssystem BS einer Kommunikationsanlage K zu steuernden Prozesse dargestellt.
Den einzelnen Prozessen werden entsprechend ihrer Dringlichkeit für das Betriebssystem BS Prioritätswerte PR zugeordnet. Die durch das Betriebssystem BS zu koordinierenden Prozesse erhalten dabei folgende Prioritätswerte PR :
Prioritätswert 1 (höchster Prioritätswert):
   Verwaltung der einzelnen Prozesse, z.B.
   Betriebssystemeigene Timer, Umschaltung der Prioritäten.
Prioritätswert 2:
   Benutzerprozesse, deren Aufgaben zeitkritisch pro Benutzer ausgeführt werden, z.B.
   zeitliche Steuerung von Signalisierungstönen im Amtsverkehr.
Prioritätswert 3:
   Anreizsicherung, Anreizausgabe sowie zeitkritische Aufgaben, z.B. Wahlsicherung und Weiterleitung.
Prioritätswert 4:
   Benutzerprozesse, deren Aufgaben zeitverteilbar pro Bentzer ausgeführt werden können, z.B.
   Vermittlungstechnik, Schaltung der Sprechwege.
Prioritätswert 5:
   Das Zeitmanagement, das eine gleichmäßige auf die aktiven Benutzer verteile Weitergabe der gesicherten Anreize vornimmt.
Prioritätswert 6:
   Verwaltungs- und Testaufgaben z.B.
   zyklische Speichertests, Kundendatensätze.

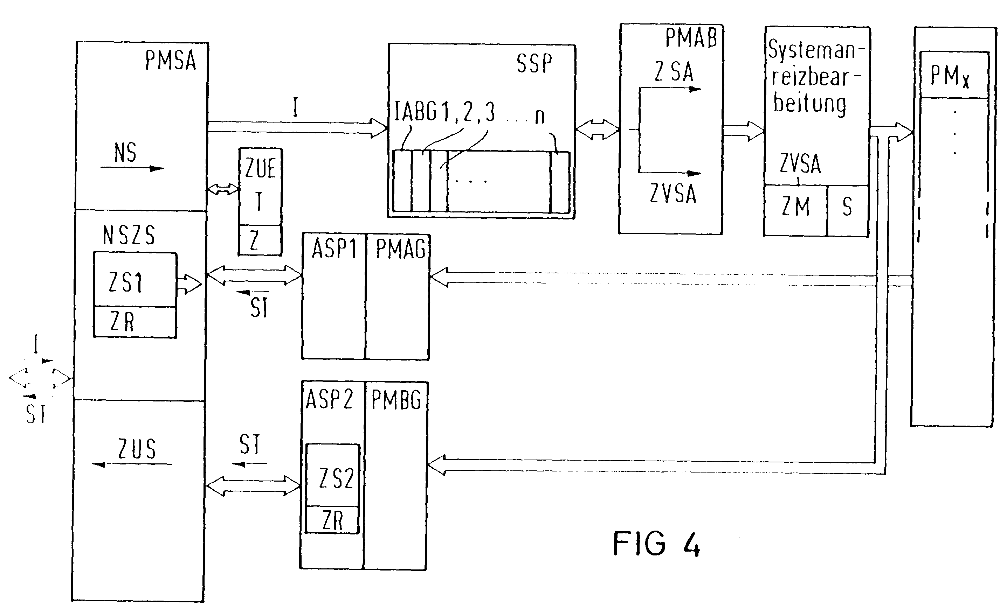

Die über den HDLC-Bus von den Anschaltebaugruppen ABG übertragenen Signalisierungsinformationen I und die daraus resultierenden Systemaufgabe/Systemanreize oder die zu den Anschaltebaugruppen ABG über den HDLC-Bus zu übertragenden Steuerinformationen ST werden durch das Betriebssystem BS der Kommunikationsanlage K erkannt und entsprechende Prozesse angestoßen.
Die Systemaufgaben zur "HDLC-Streckenbearbeitung" werden durch das Betriebssystem BS des Zentralprozessors CP der Kommunikationsanlage K durch ein Streckenbearbeitungsprogrammodul PMSA abgearbeitet.
Das Programmodul PMSA ist dabei mit dem höchsten Prioritätswert PR (Prioritätswert 1) in der Prozeßliste PL vermerkt. Einer der Gründe, warum das Streckenbearbeitungsprogrammodul PMSA den höchsten Prioritätwert PR (1) zugewiesen bekommt, ist, daß sichergestellt sein muß, daß jede Signalisierungsinformation I von den Anschaltebaugruppen ABG erkannt und gesichert werden kann.
Einem Ausgabeprogrammodul PMAG zur Ausgabe von Steuerinformationen ST wird in der Prozeßliste PL der Prioritätswert 2 zugewiesen.
Einem Speicherabarbeitungsprogrammodul PMAB für die in einem bestimmen Speicherbereich eines RAM Speichers IABG1, IABG2,...,IABGn des Systemspeichers SSP (siehe FIG. 4) abgelegten anschaltebaugruppenspezifischen Signalisierungsinformationen I ist der Prioritätswert 3 zugewiesen.

In Figur 4 ist das Zusammenwirken der Programmodule zur "HDLC-Streckenbearbeitung": Streckenbearbeitungsprogrammodul PMSA, Speicherabarbeitungsprogrammodul PMAB, erstes Ausgabeprogrammodul PMAG, zweites Ausgabeprogrammodul PMBG dargestellt.
Das Streckenbearbeitungsprogrammodul PMSA hat die Aufgabe, während eines Bearbeitungszyklus BZY zeitgerecht den Abscannprozeß der Anschaltebaugruppen ABG einzuleiten und durchzuführen sowie die Signalisierungsinformation I der Anschaltebaugruppen ABG innerhalb eines den jeweiligen Anschaltebaugruppen ABG zugeordneten Speicherbereichs IABG1,
IABG2,...,IABGn (z.B. RAM-Speicher) des Systemsspeichers SSP der Kommunikationsanlage K abzulegen.
Das Streckenbearbeitungsprogrammodul PMSA unterscheidet während eines Bearbeitungszyklus BZY zwischen notwendigen Systemaufgaben NS und zeitunkritischen Systemausgaben ZUS.

Eine notwendige Systemaufgabe NS ist das Abspeichern der Signalisierungsinformation I in den dafür vorgesehenen Speicherbereich IABG1,IABG2,...,IABGn des Systemspeichers SSP.

Nach Abarbeitung der sofort auszuführenden, notwendigen Systemaufgaben NS werden weitere, auf einer ersten Zeitscheibe ZS1 unter einem Zeitraster ZR als notwendig abgelegte Systemaufgaben NSZS, von dem Streckenbearbeitungsprogrammodul PMSA abgearbeitet. Des weiteren hat das Streckenbearbeitungsprogrammodul PMSA unter Berücksichtigung der Zeitdauer des Bearbeitungszyklus BZY die Aufgabe, die in einem ersten und zweiten Ausgabespeicher ASP1, ASP2 abgelegten Steuerinformationen ST an die Anschaltebaugruppen ABG zu übertragen.
Die im zweiten Speicher ASP2 unter der Verwendung eines Zeitrasters ZR auf einer zweiten Zeitscheibe ZS2 abgelegten Steuerinformationen ST werden erst dann von dem Streckenbearbeitungsprogrammmodul PMSA ausgelesen, wenn die im ersten Speicher ASP1 abgelegten Steuerinformationen ST vollständig ausgelesen sind. Das Schreiben und Lesen in und aus dem ersten Speicher ASP1 erfolgt dabei nach dem FIFO - First In, First Out - Modus.
Ein zur Speicherabarbeitung vorgesehenes Programmodul PMAB hat die Aufgabe, die in einem bestimmten Speicherbereich IABG1,IABG2,...,IABGn des Systemspeichers SSP zwischengespeicherte anschaltebaugruppenspezifische Signalisierungsinformation I aus dem Systemspeicher SSP auszulesen, in Systemanreize umzusetzen und an Empfängerbaugruppen weiterzuleiten. Bei der Verteilung der Systemanreize an die jeweilige/n Empfängerbaugruppe/n wird jeweils unterschieden zwischen zeitverteilten verteilten Systemanreizen ZVSA und zeitkritschen Systemanreizen ZSA. Die Bearbeitung der zeitverteilten kritischen Systemanreize ZVSA kann zeitverteilt innerhalb einer Akzeptanzzeit stattfinden. Zeitkritische Anreize ZSA werden durch einen Meldungsverkehr innerhalb des Betriebssystems BS an einen höherprioren Prozeß weitergeleitet und dort sofort abgearbeitet.
Ein erstes Ausgabeprogrammodul PMAG sowie ein zweites Ausgabeprogrammodul PMBG haben die Aufgabe, jeweils die Steuerinformationen ST des Kommunikationssystems K in ein der Anschaltebaugruppe ABG entsprechendes anschaltebaugruppenspezifische Format umzusetzen und jeweils in den zugehörigen Ausgabespeichern ASP1, ASP2 abzulegen.

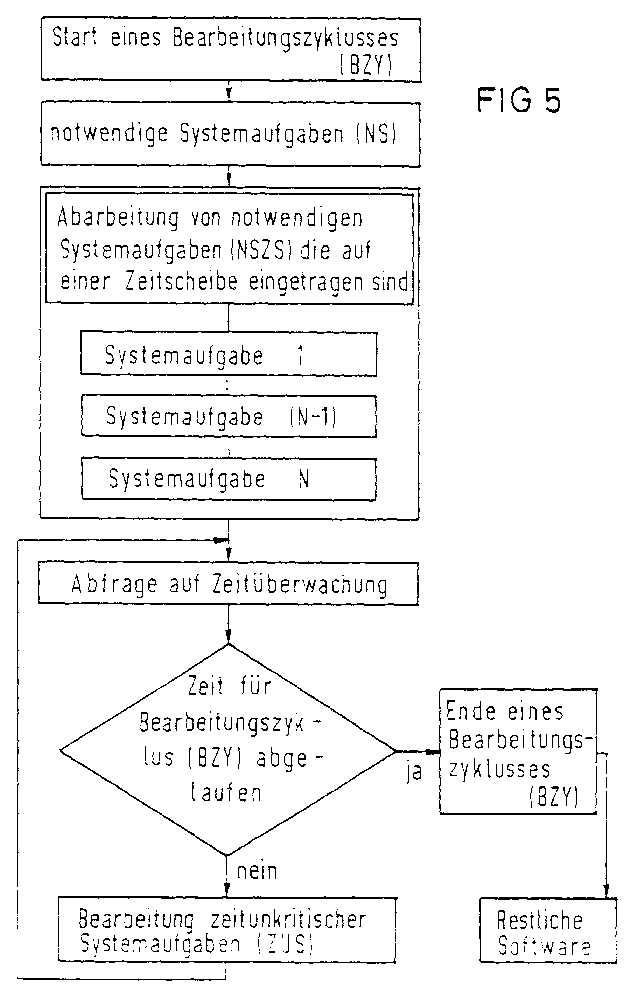

In Figur 5 ist ein Ablaufdiagramm dargestellt, anhand dessen sich die wesentlichen programmtechnischen Schritte des Streckenbearbeitungsprogrammoduls PMSA innerhalb eines Bearbeitungszyklus BZY nachvollziehen lassen.
Dem Streckenbearbeitungsprogrammodul PMSA ist, wie in Figur 3 angedeutet, der höchste Prioritätswert zugeteilt.
Innerhalb des Bearbeitungszyklus BZY einer HDLC-Streckenbearbeitung wird zwischen sofort abzuarbeitenden notwendigen Systemaufgaben NS und abzuarbeitenden notwendigen Systemaufgaben NSZS, die mit Hilfe eines Zeitrasters ZR auf einer ersten Zeitscheibe ZS1 verteilt sind, unterschieden.
Als erster Programmschritt wird zunächst die Bearbeitung der notwendigen Systemaufgaben NS, wie z.B, das Abscannen der Anschaltebaugruppen ABG, durch das Streckenbearbeitungsprogrammodul PMSA durchgeführt.
Im Anschluß daran werden die unter dem Zeitraster ZR auf der ersten Zeitscheibe ZS1 verteilten notwendigen Systemaufgaben NSZS (Systemaufgabe 1 bis Systemaufgabe N) erledigt. Eine notwendige, auf der ersten Zeitscheibe ZS1 enthaltene Systemaufgabe NSZS ist das Abfragen einer Ausfallerkennung einer Anschaltebaugruppe ABG nach einem Zeitintervall von 50 mS.

Nach der Abarbeitung aller notwendigen Systemaufgaben NS, NSZS wird ein Taktzähler T einer Zeitüberwachungseinheit ZUE nach dessen Zählerstand Z abgefragt.

Das Zeitintervall des Zählrasters ZR des Taktzählers T in der Zeitüberwachungseinheit ZUE beträgt vorzugsweise 2mS. Die Dauer des Bearbeitungszyklus BZY beträgt vorzugsweise 10 mS.

Entspricht der Zeitwert des Zählerstandes Z des Taktzählers T nach Beendigung der gesamten notwendigen Systemaufgaben NS,NSZS der Zeitdauer des Bearbeitungszyklus BZY, so startet das Streckenbearbeitungsprogrammodul PMSA von neuem mit den innerhalb eines Bearbeitungszyklus BZY auszuführenden notwendigen Systemaufgaben NS,NSZS.

Ist der Zeitwert des Zählerstandes Z des Taktzählers T noch innerhalb der Zeitdauer des Bearbeitungszyklus BZY, so kann mit der Abarbeitung von zeitunkritischen Systemaufgaben ZUS begonnen werden. Eine zeitunkritische Systemaufgabe ist z.B. das Übertragen von Steuerinformation/en ST über den HDLC-Bus an die Anschaltebaugruppen ABG. Jeweils nach Abschluß einer zeitunkritischen Systemaufgabe ST wird der Zählerstand Z des Taktzählers T erneut abgefragt. Hat der Zählerstand Z einen vorgegebenen Wert von 2 bei einem Zeitintervall des Zeitrasters ZR von 2mS noch nicht erreicht, so kann mit der weiteren Abarbeitung einer weiteren zeitunkritischen Systemaufgabe ZUS begonnen werden. Nach jeder Abarbeitung einer zeitunkritischen Systemaufgabe ZUS wird erneut der Zählerstand Z des Taktzählers T der Zeitüberwachungseinheit ZUE abgefragt. Der Zeitwert des Zählerstandes Z entscheidet dann über eine erneute Abarbeitung oder über den Abbruch der zeitunkritischen Systembearbeitung.

## Patentansprüche

1. Steuerung einer Busverbindung in einer programmgesteuerten Kommunikationsanlage (K) bzw. Vermittlungseinrichtung zwischen einem Zentralprozessor (CP) und mindestens einer Anschaltebaugruppe (ABG), wobei die an einen gemeinsamen Bus (HDLC) angeschlossenen Anschaltebaugruppen (ABG) über eine Baugruppensteuerung (PBC) mit einer Busstruktur (Signalbus, Datenbus, Adreßbus) eines zur Steuerung der Kommunikationsanlage (K) dienenden Zentralprozessors (CP) verbunden sind,
**dadurch gekennzeichnet**,
daß in einer Prozeßliste (PL) des Zentralprozessors (CP) die Bearbeitung einer an den Anschaltebaugruppen (ABG) anliegenden anschaltebaugruppenspezifischen Signalisierungsinformation (I) durch ein mit hoher Priorität (PR) ausgestattetes Streckenbearbeitungsprogrammodul(PMSA) als ablaufbereit vermerkt wird, wobei das Streckenbearbeitungsprogrammodul (PMSA) zwischen notwendigen Systemaufgaben (NS) und zeitunkritischen Systemaufgaben (ZUS) unterscheidend innerhalb eines Bearbeitungszyklus (BZY) eine anliegende anschaltebaugruppenspezifische Signalisierungsinformation (I), als notwendige Systemaufgabe erkennt, und in einen den Anschaltebaugruppen (ABG) zugeordneten Systemspeicher (SSP) des Zentralprozessors (CP) zwischenspeichert, danach die unter einem Zeitraster (ZR) auf einer ersten Zeitscheibe (ZS1) eingereihten notwendigen Systemaufgaben (NSZS) abarbeitet und dann zyklische, zeitunkritische Systemaufgaben (ZUS) entsprechend einem Zählerstand (Z) eines durch Interruptsteuerung im Hintergrund geführten Taktzählers (T) einleitet.

2. Steuerung einer Busverbindung nach Anspruch 1,
**dadurch gekennzeichnet**,
daß ein Speicherabarbeitungsprogrammodul (PMAB) die in einem Systemspeicher (SSP) zwischengespeicherte anschaltebaugruppenspezifische Signalisierungsinformation (I) in zeitverteilte Systemanreize (ZVSA) und zeitkritische Systemanreize (ZSA) umsetzt und den Systemanreizen, (ZVSA, ZSA) innerhalb des Betriebssystems (BS) eine niedere oder höhere Priorität (PR) zuweisend die entsprechenden Programmodule (PMx) abarbeitet, wobei die zeitverteilten Systemanreize (ZVSA) in einen Speicherbereich (S) eines Zeitmanagementsystems (ZM) eingereiht werden.

3. Steuerung einer Busverbindung nach Anspruch 1,
**dadurch gekennzeichnet,**
daß das Zählraster (Z) des im Hintergrund geführten Taktzählers (T) klein ist gegenüber einem Bearbeitungszyklus (BZY).

4. Steuerung einer Busverbindung nach Anspruch 1,
**dadurch gekennzeichnet,**
daß ein erstes Ausgabeprogrammodul (PMAG) Steuerinformationen (ST) an die Anschaltebaugruppen (ABG) in ein anschaltebaugruppenspezifisches Format umsetzt und dieses in einen ersten Ausgabespeicher (ASP1) abspeichert.

5. Steuerung einer Busverbindung nach Anspruch 4,
**dadurch gekennzeichnet,**
daß die Speicherabarbeitung des ersten Ausgabespeichers (ASP1) nach dem FIFO Modus durchgeführt wird.

6. Steuerung einer Busverbindung nach Anspruch 4,
**dadurch gekennzeichnet,**
daß ein zweites Ausgabeprogrammodul (PMBG) zeitunkritische anschaltebaugruppenspezifische Steuerinformationen (ST), insbesondere Wartungsinformationen, in einen zweiten Ausgabespeicher (ASP2) einträgt und nach einem Zeitraster (ZR) auf einer zweiten Zeitscheibe (ZS2) als zeitunkritische Steuerinformation (ST) überträgt.

## Claims

1. Control of a bus connection in a program-controlled communications installation (K) or switching equipment between a central processor (CP) and at least one access module (ABG), the access modules (ABG) connected to a common bus (HDLC) being connected via a module control (PBC) to a bus structure (signal bus, data bus, address bus) of a central processor (CP) used for controlling the communications installation (K), characterised in that the processing of an item of access-module-specific signalling information (I) present at the access modules (ABG) via a link processing program module (PMSA) equipped with high priority (PR) is noted as ready to run in a process list (PL) of the central processor (CP), in which arrangement the link processing program module (PMSA), distinguishing between necessary system tasks (NS) and time-uncritical system tasks (ZUS) detects within a processing cycle (BZY) an access-module-specific signalling information item (I) which is present as a necessary system task, and stores the signalling information temporarily in a system memory (SSP), allocated to the access modules (ABG), of the central processor (CP), then processes the necessary system tasks (NSZS) ordered in a first time slice (ZS1) in a time interval pattern (ZR) and then initiates cyclic time-uncritical system tasks (ZUS) in accordance with a count (Z) of a clock counter (T) controlled by interrupt control in the background.

2. Control of a bus connection according to Claim 1, characterised in that a memory processing program module (PMAB) converts the access-module-specific signalling information (I), temporarily stored in a system memory (SSP), into time-distributed system events (ZVSA) and time-critical system events (ZSA) and, assigning a lower or higher priority (PR) to the system events (ZVSA, ZSA) within the operating system (BS), processes the corresponding program modules (PMX), the time-distributed system events (ZVSA) being ordered in a memory area (S) of a time management system (ZM).

3. Control of a bus connection according to Claim 1, characterised in that the time interval pattern (Z) of the clock counter (T) controlled in the background is small compared with one processing cycle (BZY).

4. Control of a bus connection according to Claim 1, characterised in that a first output program module (PMAG) converts control information (ST) to the access modules (ABG) into an access-module-specific format and stores this in a first output memory (ASP1).

5. Control of a bus connection according to Claim 4, characterised in that the memory processing of the first output memory (ASP1) is carried out in accordance with the FIFO mode.

6. Control of a bus connection according to Claim 4, characterised in that a second output program module (PMBG) enters time-uncritical access-module-specific control information (ST), particularly maintenance information, into a second output memory (ASP2) and transfers this information as time-uncritical control information (ST) into a second time slice (ZS2) in accordance with a time interval pattern (ZR).

## Revendications

1. Unité de commande d'une liaison par bus dans une installation de communication (K) commandée par programme ou dans un dispositif de commutation, commandé par le programme, entre un processeur central (CP) et au moins un module de raccordement (ABG), les modules de raccordement (ABG) raccordés à un bus commun (HDLC) étant reliés par l'intermédiaire d'une unité de commande de module (PBC) à une structure de bus (bus de transmission de signaux, bus de transmission de données, bus de transmission d'adresses) d'un processeur central (CP) destiné à la commande de l'installation de communication (K), caractérisée par le fait
que dans une liste de processus (PL) du processeur central (CP), le traitement d'une information de signalisation (I) appliquée aux modules de raccordement (ABG) et spécifique d'un module de raccordement, est indiqué comme étant prêt à la mise en oeuvre, par un module de programme de traitement de section (PMSA) de priorité grande (PR), le module de programme de traitement de section (PMSA) reconnaissant pendant un cycle de traitement (BZY), en établissant une distinction entre des tâches nécessaires (NS) du système et des tâches (ZUS) du système non urgentes, une information de signalisation appliquée (I), spécifique d'un module de raccordement, en tant que tâche nécessaire du système, et mémorisant temporairement cette information dans une mémoire de système (SSP), associée aux modules de raccordement (ABG), du processeur central (CP), puis traitant les tâches nécessaires (NSZS) du système, qui sont ordonnées dans une trame temporelle (ZR) sur un premier créneau temporel (ZS1), et déclenchant ensuite des tâches cycliques (ZUS) du système, non urgentes, en fonction d'un état de comptage (Z) d'un compteur de cadence (S) piloté en arrière-plan par une commande d'interruption.

2. Unité de commande d'une liaison de bus suivant la revendication 1, caractérisée par le fait qu'un module de programme de traitement de mémoire (PMAB) convertit l'information de signalisation (I), mémorisée temporairement dans une mémoire (SSP) du système et spécifique d'un module de raccordement, en des excitations (ZVSA) du système, réparties dans le temps, et en des excitations (ZSA) du système, urgentes, et traite les modules de programme correspondant (PMx) en affectant une priorité basse ou haute aux excitations (ZVSA,ZSA) à l'intérieur du système d'exploitation (BS), les excitations (ZVSA) du système, réparties dans le temps, étant rangées dans une zone de mémoire (S) d'un système (ZM) de gestion temporelle.

3. Unité de commande d'une liaison de bus suivant la revendication 1, caractérisée par le fait que la trame de comptage (Z) du compteur de cadence (T), pilotée en arrière-plan, est courte par rapport à un cycle de traitement (BZY).

4. Unité de commande d'une liaison de bus suivant la revendication 1, caractérisée par le fait qu'un premier module de programme de sortie (PMAG) convertit des informations de commande (ST) envoyées aux modules de raccordement (ABG), en un format spécifique d'un module de raccordement et mémorise ce format dans une première mémoire de sortie (ASP1).

5. Unité de commande d'une liaison de bus suivant la revendication 4, caractérisée par le fait que le traitement de la première mémoire de sortie (ASP1) est effectué selon le mode FIFO.

6. Unité de commande d'une liaison de bus suivant la revendication 4, caractérisée par le fait qu'un second module de programme de sortie (PMBG) introduit des informations de commande (ST) non urgentes et spécifiques de modules de raccordement, notamment des informations de maintenance, dans une seconde mémoire de sortie (ASP2) et, après une trame temporelle (ZR), les transfère, en tant qu'information de commande (ST) non urgente, dans un second créneau temporel (ZS2).
